# EUROPEAN PATENT APPLICATION

(11) **EP 3 051 482 A1**
(43) Date of publication of application: **03.08.2016**
(21) Application number: 16153009.2
(22) Date of filing: 27.01.2016
(51) Int. Cl.: G06Q 30/02, B67D 7/04

(54) **FILLING STATION OF FUEL**

(30) Priority: 27.01.2015 IT MI20150085
(71) Applicant: De Filippis, Nicola Rocco, 20831 Seregno (Monza Brianza) (IT)
(72) Inventor: De Filippis, Nicola Rocco, 20831 Seregno (Monza Brianza) (IT)
(74) Representative: Lunati & Mazzoni S.r.L.

(57) **Abstract**

A filling station (1) of fuel for land vehicles comprising: at least one main tank (2) and at least one fuel pump (3) comprising: an ejector nozzle (4) of fuel, which forms a fluid passage connection with the main tank (2), suitable to introduce the fuel into the tank (21) of a vehicle (20) of a user, dispensing means (5) of the fuel suitable to transfer the fuel from the main tank (2) to the ejector nozzle (4), means of control (6) of the dispensing means (5), suitable to control the transfer of fuel from the main tank (2) to the ejector nozzle (4), a main display (7) suitable to indicate at least a measure proportional to the fuel dispensed, the filling station (1) further comprising at least one video camera (8) suitable to film the user using the fuel pump (3), means of automatic recognition (9) of the user using the fuel pump (3) functionally connected to the video camera (8) and suitable to automatically recognise at least one physical characteristic of the user, the fuel pump (3) comprising display means (10) suitable to display images or film clips selected according to the physical characteristics of the user.

## Description

The present invention relates to a filling station of fuel, in particular for land vehicles, of the type as recited in the preamble of the independent claims.

Filling pumps and stations for fuel such as petrol, diesel or various gases, for land vehicles, such as cars, motor vehicles, lorries and so on are known in the prior art.

They comprise fuel pumps at which the user, with a vehicle, can connect a large fuel tank to the tank of the vehicle, operate a specific pump, introduce the fuel into the tank of the vehicle by means of said pump and pay for the fuel. Payment may be made before or after refuelling.

More in detail the user takes hold of the fuel ejector nozzle, which is provided with a specific handle, inserts it in the tank of the vehicle and operates a control lever, close to the handle, which activates the pump to dispense fuel into the tank.

During the refuelling operation, the user can see how much fuel has been dispensed and the cost of said fuel, displayed on a screen.

Said refuelling operation takes about five minutes and ends when the user decides that sufficient fuel has been introduced, or the right amount of money has been spent, or when a sensor in the dispenser and close to the ejector nozzle indicates that the fuel tank of the vehicle is full.

The prior art solution described above has several significant drawbacks.

In particular, the refuelling operation takes a very long time and is tedious for the user.

Said operation may be performed by a specific pump attendant, but this involves additional costs.

Moreover, the flow rate of the fuel pump cannot be increased, because this could lead to the possibility of fuel leaking out of the vehicle's fuel tank before the tank full sensor stops the flow of fuel.

In this situation the technical purpose of the present invention is to develop a fuel filling station that is able to substantially overcome the inconveniences mentioned above.

Within the sphere of said technical purpose one important aim of the invention is to provide a fuel filling station that makes the refuelling operation less tedious.

The technical purpose and specified aims are achieved with a fuel filling station as claimed in the appended claim 1. Examples of a preferred embodiment are described in the dependent claims.

The characteristics and advantages of the invention are clearly evident from the following detailed description of preferred embodiments thereof, with reference to the accompanying drawings, in which:

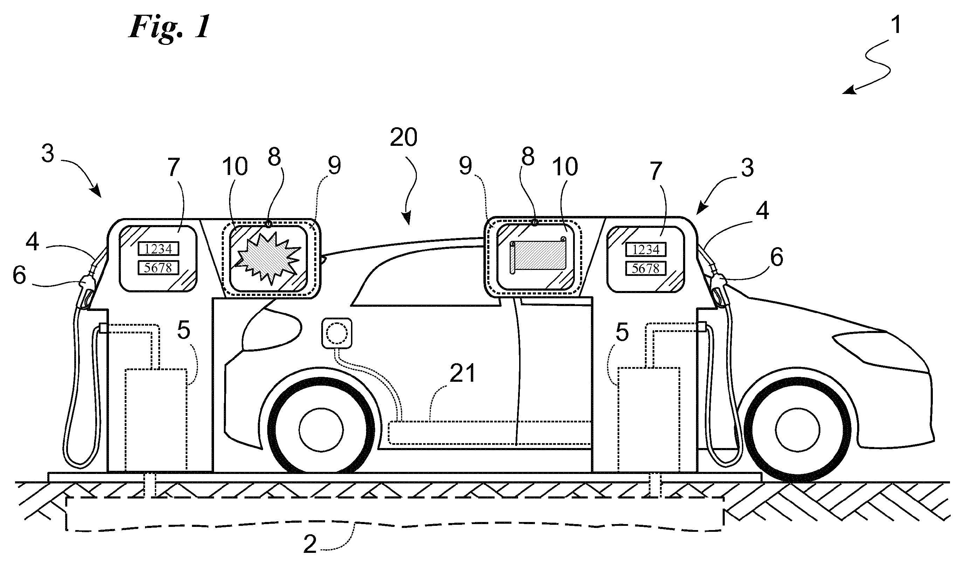

**Fig. 1** shows a fuel filling station according to the invention.

With reference to the Figures, reference numeral **1** globally denotes the fuel filling station according to the invention.

It is suitable to dispense fuel such as petrol, diesel, natural gas, LPG or other fuel to vehicles **20** preferably land vehicles, such as, in particular, cars, motor vehicles, lorries and so on. Said vehicles 20, which are driven by users, are provided with a specific fuel tank **21**.

The filling station 1 comprises at least one main tank **2**, which is preferably under the ground and is suitable to contain the fuel.

It also comprises at least one, and preferably a plurality of fuel pumps **3**.

Each fuel pump 3 comprises at least one ejector nozzle **4** of fuel, which forms a fluid passage connection with a main tank **2** and is suitable to introduce the fuel into the tank 21 of a user's vehicle 20.

Each fuel pump 3 further comprises dispensing means **5** of the fuel suitable to transfer the fuel from the main tank 2 to the ejector nozzle 4. The dispensing means substantially consist of a pump and of hoses to connect the nozzle 4 to the tank 21 of the vehicle 20.

Each fuel pump 3 further comprises control means **6** of the dispensing means 5, suitable to control the transfer of fuel from said main tank 2 to the ejector nozzle 4.

The control means 6 preferably comprise a lever or trigger, arranged near a handle of the ejector nozzle 4 and suitable to manually operate the control means 6. The control means 6 further preferably comprise a sensor, arranged near the ejector nozzle 4 and suitable to detect whether the tank 21 is full and thus automatically stop the dispensing of fuel.

Each fuel pump 3 further comprises a main display **7** suitable to indicate at least a measure proportional to the fuel dispensed. In particular, said main display 7 may indicate the amount, for example in litres, of fuel dispensed, and/or the total cost, for example in the local currency, of the fuel dispensed.

Each fuel pump 3 further comprises display means **10** suitable to display images or film clips. Such means preferably comprise a secondary screen, for example a screen or monitor or television for example of the LCD type or of a similar type, preferably placed alongside the main display 7 or near the latter. The display means 10 may also coincide with the main display 7. The display means 10 may comprise a screen that displays the contents of the display means 10, described later on in this document, as well as the information shown on the main display 7 as described previously.

The filling station 1 further comprises at least one video camera **8** suitable to film the user using the fuel pump 3. In detail there may be one video camera for each fuel pump 3. Furthermore, the video camera 8 is preferably incorporated into or arranged next to the display means 10, in particular the screen.

The video camera 8 may also film the vehicle, in particular information about the make, or also about the model and the registration plate.

The filling station 1 further and innovatively comprises means of automatic recognition **9** of the user using said fuel pump 3, functionally connected to the video camera 8 and suitable to automatically recognise at least one physical characteristic of the user.

In particular, the automatic recognition means 9 consist of a computer with software capable of facial recognition as described more in detail below. Similar software programs, known as "anonymous video analytics" or "facial recognition software" already exist in the field of security, for example for airports, security applications and the like.

In detail, the automatic recognition means 9 are suitable to recognise at least one, and preferably more than one, of the following parameters: gender (male, female), approximate age, rated for instance according to ten-year or similar age brackets, and race (African, Asian, Caucasian, etc.).

The automatic recognition means 9 may also be able to recognise the vehicle, for example one or more of the following parameters: make, model, type, registration plate.

The automatic recognition means 9 are functionally and operationally connected to said display means **10** and display images or film clips selected according to said at least one physical characteristic of said user. For example commercials selected according to the user and, alternatively also to the vehicle. Preferably the automatic recognition means 9 are installed inside or are incorporated into the display means 19 in particular the screen.

The functioning of the filling station 1 described above in a structural sense, is as follows.

The operator arrives at the filling station 1 and approaches the fuel pumps 3 and refuels in the same way as at a traditional filling station or fuel pump.

The user preferably fills the fuel tank him or herself by inserting the ejector nozzle 4 in the tank 21 of the vehicle 20 and operating the dispensing means using the control means 6.

Meanwhile the video camera 8 films the user and the automatic recognition means 9 identify said parameters of said user and alternatively and additionally of said vehicle. Said recognition means 9 then select the images or film clips to show the user on the basis of said parameters. For example, fashion commercials for women, sports film clips for men, and so on.

The recognition means 9 operate, or in any case, change the screens or display means 10 which thus display said film clips or images. Said screens may also give the user additional information, for example via the internet, such as addresses to complete a purchase of a product being advertised. Said address may be provided for example by means of a QR code or the like.

If the recognition means 9 are unable to recognise the user, the display means 10 may show film clips or images suitable for a wider public, such as information about the weather or traffic.

When refuelling is complete, the user gets back into the vehicle and drives off.

The video camera 8 thus no longer films the latter and the recognition means 9 control the display means 10 so that these do not display specific film clips.

The filling station 1 according to the invention achieves some important advantages.

Said filling station makes the refuelling procedure less tedious for the user and gives the latter precise and relevant information.

Modifications and variations may be made to the invention described herein without departing from the scope of the inventive concept as defined in the claims.

All details may be replaced with equivalent elements and the scope of the invention includes all other materials, shapes and dimensions.

## Claims

1. Filling station (1) of fuel for land vehicles, comprising:
- at least one main tank (2) part of the filling station (1),
- at least one fuel pump (3) comprising:
- an ejector nozzle (4) of fuel, which forms a fluid passage connection with said main tanks (2), suitable to introduce said fuel in the tank (21) of a vehicle (20) of a user of the filling station (1),
- dispensing means (5) of said fuel suitable to transfer said fuel from said main tank (2) to said ejector nozzle (4),
- means of control (6) of said dispensing means (5), suitable to control the transfer of fuel from said main tank (2) to said ejector nozzle (4),
a main display (7) suitable to indicate at least a measure proportional to the fuel dispensed,
- and **characterised in that** said filling station (1) also comprises: at least one video camera (8) suitable to film the user using said fuel pump (3),
- means of automatic recognition (9) of said user using said fuel pump (3), functionally connected to said video camera (8), comprising a computer with software capable of facial recognition and suitable to automatically recognise at least one physical characteristic of said user,
- and **in that** said fuel pump (3) comprises display means (10) suitable to show images or film clips selected according to said at least one physical characteristic of said user.

2. Filling station (1) according to the previous claim, wherein one of said physical characteristics of said user automatically recognised is the gender of said user.

3. Filling station (1) according to one or more of the previous claims, wherein one of said physical characteristics of said user automatically recognised is the age of said user.

4. Filling station (1) according to one or more of the previous claims, wherein one of said physical characteristics of said user automatically recognised is the race of said user.

5. Filling station (1) according to one or more of the previous claims, wherein said display means (10) comprise a screen.

6. Filling station (1) according to the previous claim, wherein said screen is placed near said main display (7).

7. Filling station (1) according to the previous claim, wherein said screen is placed alongside said main display (7).

8. Filling station (1) according to one or more of the previous claims, wherein said automatic recognition means (9) are suitable to automatically recognise at least one feature of said vehicle.

9. Filling station (1) according to the previous claim, wherein said feature of said vehicle comprises the make.

10. Filling station (1) according to claim 8 or 9, wherein said feature of said vehicle comprises the model.

11. Filling station (1) according to one or more of the claims from 8 to 10, wherein said feature of said vehicle comprises the registration number.

12. Filling station (1) according to one or more of the previous claims, comprising a video camera (8) for each of said fuel pumps (3).
